# DEMANDE DE BREVET EUROPEEN

(11) **EP 4 617 795 A1**
(43) Date de publication de la demande: **17.09.2025**
(21) Numéro de dépôt: 24163823.8
(22) Date de dépôt: 15.03.2024
(51) Int. Cl.: G04B 19/26, G09B 27/00

(54) **MÉCANISME D'AFFICHAGE DES ECLIPSES DE LUNE ET DE SOLEIL**

(71) Demandeur: The Swatch Group Research and Development Ltd, 2074 Marin (CH)
(72) Inventeur: WILLEMIN, Michel, 2515 Prêles (CH); KISSLING, Gregory, 2520 La Neuveville (CH); MARTIN, Jean-Claude, 2037 Montmollin (CH)
(74) Mandataire: ICB SA

(57) **Abrégé**

L'invention concerne un mécanisme d'affichage d'éclipses de Lune et de Soleil pour un mouvement d'horlogerie mécanique ou électromécanique configuré pour pouvoir l'actionner, le mécanisme d'affichage d'éclipses (1) comprenant un premier indicateur (2) mobile correspondant à un premier astre, par exemple le Soleil, un deuxième indicateur mobile (3) correspondant à un deuxième astre, par exemple la Lune, le mécanisme d'affichage d'éclipses (1) comprenant une première zone (6) dans laquelle le premier (2) et le deuxième indicateur (3) sont visibles, et une deuxième zone (7) permettant de dissimuler le ou les indicateurs (2, 3, 4, 5) derrière un cache (8), le mécanisme d'affichage d'éclipses (1) comprenant un troisième indicateur (4) mobile correspondant au deuxième astre dans une configuration différente de celle du deuxième indicateur (3), le troisième indicateur (4) mobile ayant au moins une caractéristique visible différente du deuxième indicateur (3) mobile, caractérisé en ce que le troisième indicateur (4) est visible dans la première zone (6) à la place du deuxième indicateur (3).

## Description

### Domaine technique de l'invention

La présente invention concerne un mécanisme d'affichage des éclipses, notamment de Lune et/ou de Soleil pour une pièce d'horlogerie.

### Arrière-plan technologique

Les mécanismes d'affichage des phases de la Lune sont connus depuis longtemps, tant dans des mécanismes purement mécaniques que dans les mécanismes électromécaniques.

Des mécanismes d'affichage plus perfectionnés permettent même d'afficher en outre d'autres astres, en particulier le Soleil, afin de pourvoir déterminer le moment de l'apparition d'éclipses de la Lune et/ou du Soleil.

Par exemple, le brevet EP0195742 montre un affichage muni d'aiguilles sur lesquelles sont disposés ces astres. Ce mécanisme permet notamment de déterminer l'apparition d'éclipses. Cependant, il ne permet pas de faire la différence entre les différents types d'éclipses. En effet, il existe des éclipses de Lune ou de Soleil, qui sont totales ou partielles, et dépendent de l'endroit où l'on se trouve sur terre. De plus, il existe aussi des éclipses annulaires du Soleil, lorsque le diamètre apparent de la Lune est inférieur à celui du Soleil.

Les documents CH715722 et WO2020/152015 montrent un autre type de mécanisme d'affichage, qui permet de faire la différence entre une éclipse partielle ou totale, voire de la suivre en temps réel. Cependant, ce mécanisme d'affichage n'est pas facilement lisible, ni intuitif à première vue.

### Résumé de l'invention

L'invention se propose de fournir un mécanisme d'affichage des éclipses plus simple à comprendre, avec une visualisation plus claire pour un utilisateur.

A cet effet, l'invention se rapporte à un mécanisme d'affichage d'éclipses de Lune et de Soleil pour un mouvement d'horlogerie mécanique ou électromécanique configuré pour pouvoir l'actionner, le mécanisme d'affichage d'éclipses comprenant un premier indicateur mobile correspondant à un premier astre, par exemple le Soleil, un deuxième indicateur mobile correspondant à un deuxième astre, par exemple la Lune, le mécanisme d'affichage d'éclipses comprenant une première zone dans laquelle le premier et le deuxième indicateur sont visibles, et une deuxième zone permettant de dissimuler le ou les indicateurs derrière un cache, le mécanisme d'affichage d'éclipses comprenant un troisième indicateur mobile correspondant au deuxième astre dans une configuration différente de celle du deuxième indicateur, le troisième indicateur mobile ayant au moins une caractéristique visible différente du deuxième indicateur mobile, le premier indicateur, le deuxième indicateur et le troisième indicateur ayant de préférence une forme de disque.

L'invention est remarquable en ce que le troisième indicateur est visible dans la première zone à la place du deuxième indicateur d'affichage.

Selon un mode particulier de réalisation de l'invention, le deuxième indicateur mobile est au moins en partie superposable sur le premier indicateur mobile pour représenter une éclipse partielle du premier astre, voire une éclipse totale du premier astre, lorsque le deuxième indicateur mobile recouvre complètement le premier indicateur.

Selon un mode particulier de réalisation de l'invention, la caractéristique visible différente du troisième indicateur est le diamètre, qui est de préférence inférieur à celui du deuxième indicateur.

Selon un mode particulier de réalisation de l'invention, le troisième indicateur est superposable sur le premier indicateur pour représenter une éclipse annulaire du Soleil.

Selon un mode particulier de réalisation de l'invention, le mécanisme d'affichage comprend un quatrième indicateur mobile correspondant au deuxième astre dans une configuration différente de celles du deuxième indicateur et du troisième indicateur, le quatrième indicateur ayant au moins une caractéristique visible différente du deuxième indicateur et du troisième indicateur.

Selon un mode particulier de réalisation de l'invention, la caractéristique différente du quatrième indicateur par rapport au deuxième indicateur est sa couleur, qui est de préférence rouge pour représenter une éclipse de Lune.

Selon un mode particulier de réalisation de l'invention, le quatrième indicateur est visible dans la première zone à la place du deuxième indicateur et/ou du troisième indicateur.

Selon un mode particulier de réalisation de l'invention, les indicateurs mobiles sont rotatifs autour d'un même axe de rotation.

Selon un mode particulier de réalisation de l'invention, le deuxième indicateur a aussi pour fonction de représenter les phases de la Lune, en fonction de sa position par rapport au cache.

Selon un mode particulier de réalisation de l'invention, la première et la deuxième zone ont des formes correspondant aux mécanismes d'affichage à phases de Lune usuels.

Selon un mode particulier de réalisation de l'invention, le mécanisme d'affichage comprend un système électromécanique configuré pour actionner le mécanisme d'affichage, le système électromécanique comprenant un moteur, une unité de commande du moteur, et une unité de mémoire pour stocker les dates et lieux des éclipses de Lune et de Soleil, l'unité de commande étant configurée pour actionner le moteur en fonction des dates et lieux des éclipses stockées dans l'unité de mémoire.

Selon un mode particulier de réalisation de l'invention, le système électromécanique comprend des moyens de réglage configurés pour fournir des indications à l'unité de commande lui permettant de déterminer l'apparition d'éclipses selon l'emplacement d'un porteur du mouvement d'horlogerie.

Selon un mode particulier de réalisation de l'invention, les moyens de réglage sont actionnables, soit électroniquement, soit par un réglage mécanique.

La présente invention concerne encore un mouvement d'horlogerie comprenant un mécanisme d'affichage selon la présente invention.

### Brève description des figures

Les buts, avantages et caractéristiques de l'invention apparaîtront à la lecture de la description détaillée qui va suivre, en référence aux dessins annexés, où :
- la figure 1 représente, de façon schématisée, une vue de dessus d'un mécanisme d'affichage selon l'invention, en position d'affichage des phases de la Lune,
- la figure 2 représente, de façon schématisée, une vue de dessus du mécanisme d'affichage de la figure 1, en position d'affichage d'une éclipse totale de Soleil,
- la figure 3 représente, de façon schématisée, une vue de dessus du mécanisme d'affichage de la figure 1, en position d'affichage d'une éclipse partielle de Soleil,
- la figure 4 représente, de façon schématisée, une vue de dessus du mécanisme d'affichage de la figure 1, en position d'affichage d'une éclipse annulaire de Soleil,
- la figure 5 représente, de façon schématisée, une vue de dessus du mécanisme d'affichage de la figure 1, en position d'affichage d'une éclipse totale de Lune,
- la figure 6 représente, de façon schématisée, une vue de dessus du mécanisme d'affichage de la figure 1, en position d'affichage d'une éclipse partielle de Lune, et
- la figure 7 représente un schéma synoptique d'un système électromécanique configuré pour actionner le mécanisme d'affichage de la figure 1.

### Description détaillée de l'invention

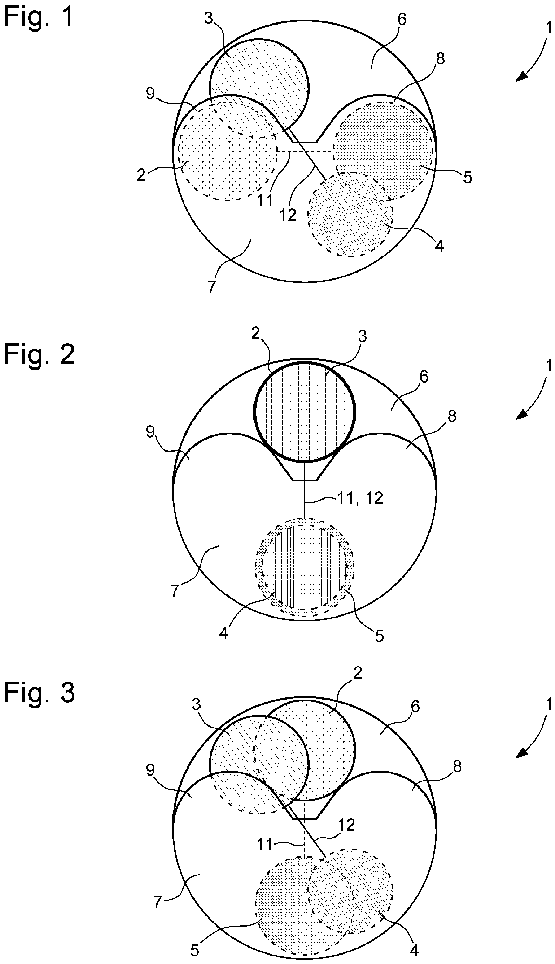

Les figures 1 à 6 montrent une représentation schématique d'un mécanisme d'affichage pour un mouvement d'horlogerie mécanique ou électromécanique configuré pour pouvoir l'actionner. De préférence, le mouvement est électromécanique.

Le mécanisme d'affichage 1 comprend un premier indicateur mobile 2 correspondant à un premier astre, par exemple le Soleil, un deuxième indicateur mobile 3 correspondant à un deuxième astre, par exemple la Lune.

En outre, le mécanisme d'affichage 1 comprend un troisième 4 et un quatrième indicateur 5 mobile, qui correspondent également chacun au deuxième astre. Cependant, l'astre est dans une configuration visible différente du deuxième indicateur 3.

Ainsi, le troisième 4 et le quatrième indicateur 5 mobile ont chacun au moins une caractéristique, qui est différente du deuxième indicateur 3 mobile. De plus, le quatrième indicateur 5 mobile correspond au deuxième astre dans une configuration différente à la fois du deuxième indicateur 3 mobile et du troisième indicateur mobile 4.

Dans ce mode de réalisation, la caractéristique différente du troisième indicateur 4 est le diamètre, qui est de préférence inférieur à celui du deuxième indicateur 3, afin de pourvoir représenter une éclipse de Soleil annulaire. Tandis que la caractéristique différente du quatrième indicateur 5 est sa couleur, qui est de préférence rouge pour représenter une éclipse de Lune.

Les indicateurs mobiles 2, 3, 4, 5 ont ici une forme de disque, sensiblement de même dimension, sauf pour le troisième indicateur 4, qui est plus petit. De préférence, le premier indicateur 2 est de couleur jaune pour représenter le Soleil, et le deuxième indicateur 3 est de couleur rose ou grise pour représenter la Lune.

Les quatre indicateurs mobiles 2, 3, 4, 5 sont mobiles en rotation autour d'un même axe de rotation. Chaque indicateur mobile est agencé à l'extrémité d'un bras 11, 12 monté sur un arbre rotatif, de manière à pourvoir être actionnable indépendamment les uns des autres.

De préférence, le premier 2 et le quatrième 5 indicateur sont agencés aux extrémités d'un même bras 11. Il en est de même du deuxième 3 et du troisième indicateur 4 mobile, qui sont agencés aux extrémités d'un autre bras 12.

Dans une variante de réalisation, chaque indicateur mobile 2, 3, 4, 5 a un bras différent, et actionnable indépendamment des bras des autres indicateurs mobiles.

Le mécanisme d'affichage d'éclipses 1 comprend une première zone 6 dans laquelle les indicateurs 2, 3, 4, 5 sont visibles, et une deuxième zone 7 permettant de dissimuler le ou les indicateurs 2, 3, 4, 5 derrière un cache 7. La première 6 et la deuxième zone ont des formes correspondant aux mécanismes d'affichage 1 à phases de Lune classiques. Ainsi, les deux zones forment ensemble un disque circulaire divisé en deux parties, le cache 7 ayant une forme demi-disque augmenté de deux demi-disques 8, 9 de diamètre inférieur au rayon du disque circulaire des deux zones. Les deux demi-disques 8, 9 s'étendent vers la zone visible. Les demi-disques 8, 9 permettent l'affichage des phases de la Lune, grâce au deuxième indicateur 3, de manière usuelle.

Le deuxième indicateur mobile 3 est au moins en partie superposable sur le premier indicateur mobile 2 pour représenter une éclipse partielle du premier astre, le deuxième indicateur mobile 3 étant entièrement superposable sur le premier indicateur 2 pour représenter une éclipse totale du premier astre.

Les indicateurs mobiles 2, 3, 4, 5 sont seulement visibles, lorsqu'ils sont disposés dans la première zone 6, et sont dissimulés par le cache 7, lorsqu'ils sont dans la deuxième zone.

Le deuxième indicateur 3 mobile est superposable au-dessus du premier indicateur 2 pour pouvoir représenter l'éclipse de Soleil.

Le deuxième indicateur 3 a aussi pour fonction de représenter les phases de la Lune. Ainsi, sur la figure 1, en fonctionnement d'affichage des phases de la Lune, le deuxième indicateur mobile 3 se déplace dans la zone visible 6, les demi-disques 8, 9 du cache 7 permettant de faire disparaitre une partie du deuxième indicateur mobile 3 pour représenter la partie visible de la Lune.

Les autres indicateurs mobiles 2, 4, 5, sont dissimulés par le cache dans la deuxième zone lorsqu'il n'y a pas d'éclipse.

A cause du deuxième bras 12 en commun d'une des variantes, lorsque le deuxième indicateur 3 se déplace, le troisième indicateur mobile 4 se déplace également, mais il reste dissimulé sous le cache 7.

Sur la figure 2, pour montrer une éclipse totale de Soleil, le premier indicateur 2 se positionne au milieu de la première zone visible 6, tandis que le deuxième indicateur 3 est superposé au-dessus du premier indicateur 2 mobile. Ainsi, la Lune recouvre et est centrée sur le Soleil pour représenter une éclipse totale de Soleil.

Pour une éclipse partielle de Soleil, comme le montre la figure 3, le deuxième indicateur 3 est superposé au-dessus d'une partie seulement du premier indicateur 2. Ainsi, on peut voir que le premier indicateur 2 a une partie visible, pour montrer que l'éclipse est seulement partielle. Le troisième et le quatrième indicateur 4, 5 restent dissimulés derrière le cache 7.

Dans le cas d'une éclipse annulaire de Soleil, dans laquelle un anneau périphérique du Soleil reste toujours visible, c'est le troisième indicateur 4 mobile, qui est superposé au-dessus du premier indicateur 2 mobile dans la première zone visible 6, comme le montre la figure 3. Le deuxième 3 et le quatrième indicateur 5 mobile sont maintenus dans la deuxième zone, derrière le cache 7. Dans ce mode de réalisation, le deuxième 3 et le troisième indicateur 4 mobile sont également superposés. Comme le troisième indicateur mobile 4 a un diamètre réduit, par rapport au premier indicateur 2, un anneau périphérique du premier indicateur 2 reste apparent pour représenter l'anneau 17 visible du Soleil.

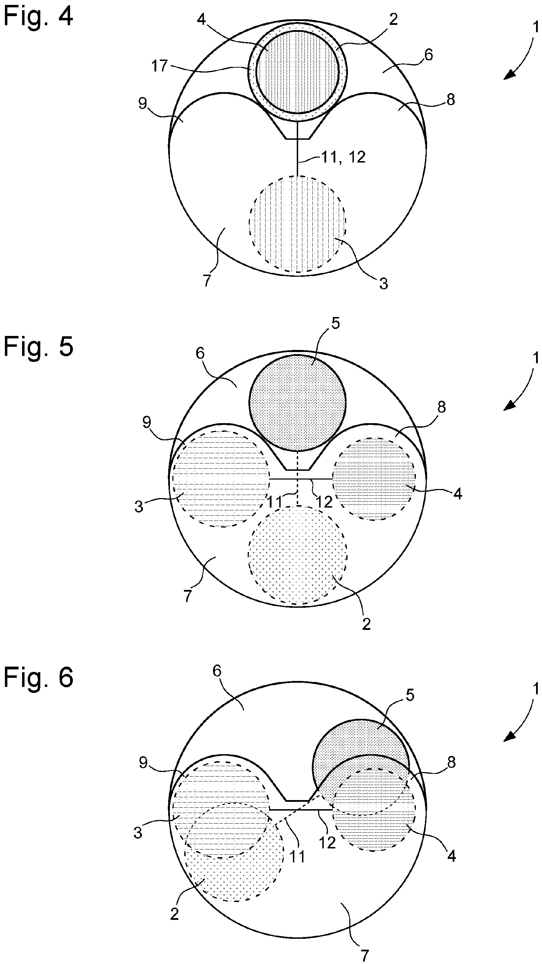

La figure 4 montre un agencement du mécanisme d'affichage 1 pour une éclipse totale de Lune. Le quatrième indicateur mobile 5 est disposé seul au milieu de la première zone visible 6. La couleur rouge du quatrième indicateur 5 mobile représente cette éclipse totale de la Lune. Les trois autres indicateurs mobiles 2, 3, 4, restent dissimulés sous le cache 7 dans la deuxième zone.

Lorsque l'éclipse de Lune n'est que partielle, le quatrième indicateur mobile 5 est positionné à cheval sur les deux zones, de manière à montrer une portion visible, et à garder une autre portion cachée sous le cache 7 de la deuxième zone, comme le montre la figure 5. Ainsi, comme une partie seulement de la Lune « rouge » apparait, on comprend que l'éclipse de Lune n'est que partielle.

L'invention se rapporte également à un dispositif électromécanique 10 pour un mouvement d'horlogerie, le dispositif électromécanique 10 étant configuré pour actionner le mécanisme d'affichage 1 décrit précédemment.

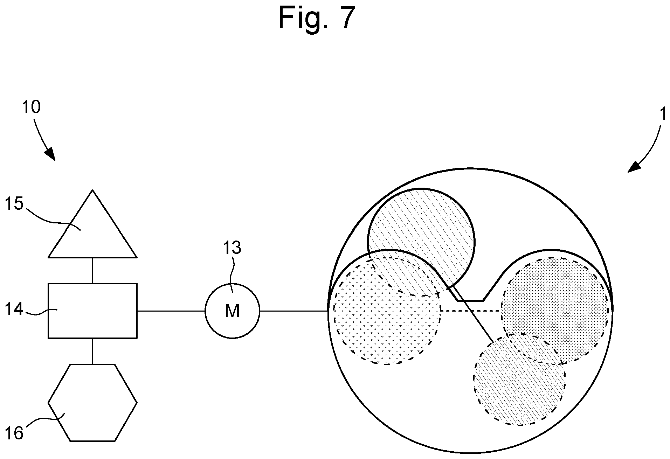

Un tel dispositif électromécanique 10 comprend une partie électronique et une partie mécanique connue de l'homme du métier. La figure 7 montre un schéma synoptique d'un tel dispositif électromécanique 10.

Le dispositif électromécanique 10 comprend un moteur 13 capable d'actionner les bras du mécanisme d'affichage 1, ainsi qu'une unité de commande 14 du moteur 13, configurée pour donner des ordres d'actionnement au moteur 13. L'unité de commande 14 est reliée au moteur 13.

Le dispositif électromécanique 10 comprend aussi une unité de mémoire 15 pour stocker les dates et lieux des éclipses de Lune et de Soleil. L'unité de commande 14 est reliée à l'unité de mémoire 15, pour pouvoir détecter l'apparition prochaine d'une éclipse. Une telle unité de mémoire 15 peut enregistrer un grand nombre de dates, de lieux et de durées d'éclipses.

Ainsi, lorsque le dispositif électromécanique 10 détecte qu'une éclipse de Lune ou de Soleil va se produire dans un lieu donné, à partir des données de l'unité de mémoire 15, il commande le moteur 13 pour agencer le ou les indicateurs mobiles correspondants dans une position correspondant à ladite éclipse pendant l'apparition de ladite éclipse.

De préférence, le dispositif électromécanique 10 comprend des moyens de réglage 16 pour fournir des indications à l'unité de commande 14 lui permettant de déterminer l'apparition d'éclipses en fonction de l'emplacement d'un porteur du mouvement d'horlogerie. En particulier, il est nécessaire d'indiquer l'endroit où l'on se trouve pour déterminer les dates, les horaires et les types d'éclipse, qui se produisent.

En outre, les moyens de réglage 16 sont actionnables, soit électroniquement soit par un réglage mécanique. Par exemple, électroniquement, directement sur l'écran de la pièce d'horlogerie, au moyen d'un menu déroulant apparaissant sur l'écran, ou bien par des moyens de transmission sans fil, par exemple à partir d'un téléphone portable, soit par un réglage mécanique, par exemple en positionnant une Lunette gravée d'une pièce d'horlogerie.

De la sorte, on peut fournir les informations nécessaires à l'affichage des éclipses correspondant à la position de l'utilisateur.

Un tel mécanisme d'affichage est agencé dans un mouvement d'horlogerie d'une pièce d'horlogerie, telle une montre.

## Revendications

1. Mécanisme d'affichage d'éclipses de Lune et de Soleil pour un mouvement d'horlogerie mécanique ou électromécanique configuré pour pouvoir l'actionner, le mécanisme d'affichage d'éclipses (1) comprenant un premier indicateur (2) mobile correspondant à un premier astre, par exemple le Soleil, un deuxième indicateur mobile (3) correspondant à un deuxième astre, par exemple la Lune, le mécanisme d'affichage d'éclipses (1) comprenant une première zone (6) dans laquelle le premier (2) et le deuxième indicateur (3) sont visibles, et une deuxième zone (7) permettant de dissimuler le ou les indicateurs (2, 3, 4, 5) derrière un cache (8), le mécanisme d'affichage d'éclipses (1) comprenant un troisième indicateur (4) mobile correspondant au deuxième astre dans une configuration différente de celle du deuxième indicateur (3), le troisième indicateur (4) mobile ayant au moins une caractéristique visible différente du deuxième indicateur (3) mobile, le premier indicateur (2), le deuxième indicateur (3) et le troisième indicateur (4) ayant de préférence une forme de disque, **caractérisé en ce que** le troisième indicateur (4) est visible dans la première zone (6) à la place du deuxième indicateur (3).

2. Mécanisme d'affichage selon la revendication 1, **caractérisé en ce que** le deuxième indicateur (3) mobile est au moins en partie superposable sur le premier indicateur (2) mobile pour représenter une éclipse partielle du premier astre, voire une éclipse totale du premier astre, lorsque le deuxième indicateur mobile (3) recouvre complètement le premier indicateur (2).

3. Mécanisme d'affichage selon la revendication 1 ou 2, **caractérisé en ce que** la caractéristique visible différente du troisième indicateur (4) est le diamètre, qui est de préférence inférieur à celui du deuxième indicateur (3).

4. Mécanisme d'affichage selon la revendication 3, **caractérisé en ce que** le troisième indicateur (4) est superposable sur le premier indicateur (2) pour représenter une éclipse annulaire du Soleil.

5. Mécanisme d'affichage selon l'une, quelconque, des revendications précédentes, **caractérisé en ce qu'**il comprend un quatrième indicateur (5) mobile correspondant au deuxième astre dans une configuration différente de celles du deuxième indicateur (3) et du troisième indicateur (4), le quatrième indicateur (5) ayant au moins une caractéristique visible différente du deuxième indicateur (3) et du troisième indicateur (4).

6. Mécanisme d'affichage selon la revendication 5, **caractérisé en ce que** la caractéristique différente du quatrième indicateur (5) est sa couleur, qui est de préférence rouge pour représenter une éclipse de Lune.

7. Mécanisme d'affichage selon l'une, quelconque, des revendications précédentes, **caractérisé en ce que** le quatrième indicateur (5) est visible dans la première zone (6) à la place du deuxième indicateur (3) et/ou du troisième indicateur (4).

8. Mécanisme d'affichage selon l'une, quelconque, des revendications précédentes, **caractérisé en ce que** les indicateurs mobiles (2, 3, 4, 5) sont rotatifs autour d'un même axe de rotation.

9. Mécanisme d'affichage selon l'une, quelconque, des revendications précédentes, **caractérisé en ce que** le deuxième indicateur (3) a aussi pour fonction de représenter les phases de la Lune, en fonction de sa position par rapport au cache (7).

10. Mécanisme d'affichage selon l'une, quelconque, des revendications précédentes, **caractérisé en ce que** la première (6) et la deuxième zone (7) ont des formes correspondant aux mécanismes d'affichage à phases de Lune usuels.

11. Mécanisme d'affichage selon l'une, quelconque, des revendications précédentes, **caractérisé en ce qu'**il comprend un système électromécanique (10) configuré pour actionner le mécanisme d'affichage (1), le système électromécanique (10) comprenant un moteur (13), une unité de commande (14) du moteur (13), et une unité de mémoire (15) pour stocker les dates et lieux des éclipses de Lune et de Soleil, l'unité de commande (14) étant configurée pour actionner le moteur (13) en fonction des dates et lieux des éclipses stockées dans l'unité de mémoire (15).

12. Mécanisme d'affichage selon la revendication 11, **caractérisé en ce que** le système électromécanique (10) comprend des moyens de réglage (16) configurés pour fournir des indications à l'unité de commande (14) lui permettant de déterminer l'apparition d'éclipses selon l'emplacement d'un porteur du mouvement d'horlogerie.

13. Mécanisme d'affichage selon la revendication 12, **caractérisé en ce que** les moyens de réglage (16) sont actionnables, soit électroniquement, soit par un réglage mécanique.

14. Mouvement d'horlogerie, **caractérisé en ce qu'**il comprend un mécanisme d'affichage (1) selon l'une, quelconque, des revendications précédentes.
